# EUROPEAN PATENT APPLICATION

(11) **EP 4 406 757 A1**
(43) Date of publication of application: **31.07.2024**
(21) Application number: 22872428.2
(22) Date of filing: 29.03.2022
(51) Int. Cl.: B60C 1/00, C08K 5/103, C08L 7/00, C08L 15/00, C08K 3/04, C08K 3/22, C08K 3/36

(54) **RUBBER COMPOSITION FOR HEAVY-LOAD TIRE**

(30) Priority: 24.09.2021 JP 2021155281
(71) Applicant: The Yokohama Rubber Co., Ltd., Hiratsuka-shi, Kanagawa 254-8601 (JP)
(72) Inventor: KAWASUMI Tomoko, Hiratsuka-shi, Kanagawa 254-8601 (JP); TAKEUCHI Mizuki, Hiratsuka-shi, Kanagawa 254-8601 (JP)
(74) Representative: Grünecker Patent- und Rechtsanwälte PartG mbB
(86) International application number: PCT/JP2022/015257
(87) International publication number: WO 2023/047669

(57) **Abstract**

Provided is a rubber composition for a heavy duty tire that can provide wear resistance and fuel economy performance improved to a level higher than that in the related art, and can provide satisfactory workability and tensile strength in a well-balanced and compatible manner. The rubber composition contains silica in amount of 40 parts by mass or more per 100 parts by mass of a diene rubber, the diene rubber containing an isoprene rubber in an amount from 60 mass% to 85 mass% and a modified styrene-butadiene rubber having a glass transition temperature of lower than -50°C in an amount from 15 mass% to 40 mass%, and contains a silane coupling agent in an amount from 1 mass% to 20 mass% with respect to a blended amount of the silica.

## Description

### Technical Field

The present invention relates to a rubber composition for a heavy duty tire, the rubber composition being intended mainly for use in a heavy duty tire.

### Background Art

Since pneumatic tires (heavy duty tires) used for vehicles such as trucks and buses have a larger load applied to the tires than tires for passenger vehicles, it is important that the pneumatic tires have an excellent wear resistance performance and a long tire life. Meanwhile, with the recent increase in concern about global environmental issues, heavy duty tires are required to have improved fuel economy performance. Furthermore, excellent workability and mechanical properties such as tensile strength are also required.

Therefore, for example, Patent Document 1 proposes blending silica in a rubber component mainly composed of natural rubber and blending a specific silane coupling agent, thereby achieving good dispersion of the silica and an improvement in wear resistance and low rolling resistance. However, in recent years, strict environmental regulations have been imposed on heavy duty tires, and requirements for fuel economy performance have been increased. Thus, the above-described measures are not necessarily satisfactory. Therefore, further measures for improving wear resistance, fuel economy performance, workability, and tensile strength are required in a rubber composition for a heavy duty tire.

### Citation List

### Patent Document

Patent Document 1: JP 2019-056068 A

### Summary of Invention

### Technical Problem

An object of the present invention is to provide a rubber composition for a heavy duty tire that can provide wear resistance and fuel economy performance improved to a level higher than that in the related art, and can provide satisfactory workability and tensile strength in a well-balanced and compatible manner.

### Solution to Problem

The rubber composition for a tire according to an embodiment of the present invention which achieves the above-mentioned object may contain silica in an amount of 40 parts by mass or more per 100 parts by mass of a diene rubber, the diene rubber containing an isoprene rubber in an amount from 60 mass% to 85 mass% and a modified styrene-butadiene rubber having a glass transition temperature of lower than -50°C in an amount from 15 mass% to 40 mass%, and may contain a silane coupling agent in an amount from 1 mass% to 20 mass% with respect to a blended amount of the silica.

### Advantageous Effects of Invention

As described above, in the rubber composition for a heavy duty tire according to an embodiment of the present invention, the isoprene rubber and the modified styrene-butadiene rubber having a glass transition temperature of lower than -50°C are used as rubber components in specific amounts, and the silica and the silane coupling agent are blended in specific amounts. Therefore, wear resistance and fuel economy performance can be improved to a level higher than that in the related art. In particular, since the modified styrene-butadiene rubber having a glass transition temperature of lower than -50°C is used in combination, fuel economy performance can be improved while wear resistance is satisfactorily maintained. In addition, since the silica and the silane coupling agent are respectively blended in appropriate amounts, the silica can be satisfactorily dispersed, and wear resistance and fuel economy performance can be effectively provided in a compatible manner.

In the rubber composition for a heavy duty tire according to an embodiment of the present invention, zinc oxide is preferably blended in an amount from 3.0 mass% to 10 mass% with respect to the blended amount of the silica. Thus, when an appropriate amount of zinc oxide is blended in the rubber composition containing the silica, an appropriate crosslinked state can be held, and tensile strength and fuel economy can be effectively provided in a compatible manner.

In the rubber composition for a heavy duty tire according to an embodiment of the present invention, a glycerin fatty acid ester and/or a glycerin fatty acid metal salt is preferably blended in an amount from 1 mass% to 20 mass% with respect to the blended amount of the silica. Thus, when the glycerin fatty acid ester and/or the glycerin fatty acid metal salt is blended in a specific amount, the dispersibility of the silica in the rubber can be improved, which is advantageous in that wear resistance and fuel economy performance are provided in a compatible manner. When the glycerin fatty acid ester and/or the glycerin fatty acid metal salt is blended in the amount described above, the viscosity of the rubber composition can be appropriately reduced, and the dispersibility can also be improved. Therefore, the rubber composition can be provided with satisfactory fuel economy and workability.

In the rubber composition for a heavy duty tire according to an embodiment of the present invention, carbon black having a nitrogen adsorption specific surface area N₂SA of from 65 m²/g to 120 m²/g is preferably blended in an amount from 1 part by mass to 20 parts by mass per 100 parts by mass of the diene rubber. Thus, when carbon black having a specific particle size is blended, the rubber can be blackened without causing heat generation.

In the rubber composition for a heavy duty tire according to an embodiment of the present invention, the diene rubber preferably contains a modified polybutadiene rubber in an amount from 1 mass% to 20 mass% with respect to 100 mass% of the diene rubber. Thus, when the rubber components contain the isoprene rubber, the modified styrene-butadiene rubber having a glass transition temperature of lower than -50°C, and the modified polybutadiene rubber, wear resistance and fuel economy performance can further be improved.

### Description of Embodiments

In the present specification, the heavy duty tire refers to a large tire to be mounted on trucks, buses, and construction vehicles. The heavy duty tire according to an embodiment of the present invention is preferably a pneumatic tire, but may be a non-pneumatic tire. In the case of a pneumatic tire, the inside thereof may be filled with air, an inert gas such as nitrogen, or other gases. The rubber composition for a heavy duty tire refers to a rubber composition that forms a constituent member of a heavy duty tire, preferably a tread rubber.

In the rubber composition for a heavy duty tire according to an embodiment of the present invention, the rubber components necessarily contain an isoprene rubber and a modified styrene-butadiene rubber. A modified polybutadiene rubber may optionally be used in combination.

Examples of the isoprene rubber include various natural rubbers, epoxidized natural rubbers, and various synthetic polyisoprene rubbers. As the isoprene rubber, a rubber generally used in a rubber composition for a tire can be used. The content of the isoprene rubber is from 60 mass% to 85 mass%, and preferably from 65 mass% to 75 mass%, based on 100 mass% of the entire diene rubber. When the isoprene rubber is contained in a specific amount as described above, wear resistance and fuel economy can be achieved in a well-balanced manner. When the content of the isoprene rubber is less than 60 mass%, chipping resistance is deteriorated. When the content of the isoprene rubber exceeds 85 mass%, fuel economy is deteriorated.

The modified styrene-butadiene rubber used in an embodiment of the present invention has a glass transition temperature of lower than -50°C, preferably from -65°C to -50°C. When the modified styrene-butadiene rubber having a specific glass transition temperature is used as described above, fuel economy performance can be improved while wear resistance is satisfactorily maintained. The content of the modified styrene-butadiene rubber is from 15 mass% to 40 mass%, and preferably from 25 mass% to 35 mass%, based on 100 mass% of the entire diene rubber. When the modified styrene-butadiene rubber is contained in a specific amount as described above, the above-mentioned effect of providing wear resistance and fuel economy performance in a compatible manner can be effectively exerted. When the content of the modified styrene-butadiene rubber is less than 15 mass%, fuel economy is deteriorated. When the content of the modified styrene-butadiene rubber exceeds 40 mass%, tensile strength is lowered.

The styrene content of the modified styrene-butadiene rubber used in an embodiment of the present invention is preferably 25 mass% or less, and more preferably 20 mass% or less. The vinyl content of the modified styrene-butadiene rubber used in an embodiment of the present invention is preferably 25 mass% or more, and more preferably 35 mass% or more. When the styrene content falls within the above-mentioned range, wear resistance can be made satisfactory. When the vinyl content falls within the above-mentioned range, fuel economy can be made satisfactory. The styrene content and the vinyl content are respectively measured by infrared spectroscopy (the Hampton method). The styrene content or vinyl content of the modified styrene-butadiene rubber can be appropriately increased or decreased by an ordinary method using, for example, a catalyst.

The molecular weight distribution represented by the ratio Mw/Mn of the weight average molecular weight Mw to the number average molecular weight Mn of the modified styrene-butadiene rubber used in an embodiment of the present invention is preferably 4.0 or less, and more preferably 2.5 or less. When the ratio Mw/Mn is adjusted to fall within the above-mentioned range, tensile strength and wear resistance can be made satisfactory. Both Mw and Mn are values in terms of polystyrene measured by gel permeation chromatography (GPC).

As the modified styrene-butadiene rubber, a rubber generally used in a rubber composition for a tire can be used. The modified styrene-butadiene rubber may be, for example, a terminal-modified styrene-butadiene rubber modified with an organic compound having a functional group at one end or both ends of a molecular chain. As the styrene-butadiene rubber before modification, either a solution-polymerized styrene-butadiene rubber or an emulsion-polymerized styrene-butadiene rubber can be used. The type of the functional group is not particularly limited, but a functional group having reactivity with a silanol group on the surface of the silica is preferably employed from the perspective of improving the dispersibility of the silica. Examples of the functional group that reacts with the silanol group include a hydroxyl group-containing polyorganosiloxane structure, an alkoxysilyl group, a hydroxyl group (hydroxy group), an aldehyde group, a carboxyl group, an amino group, an imino group, an epoxy group, an amide group, a thiol group, and an ether group. Among these, at least one selected from a hydroxyl group (hydroxy group), an amino group, and an alkoxyl group is preferred.

As described above, the modified polybutadiene rubber can be optionally used in combination as the rubber component constituting the rubber composition for a heavy duty tire according to an embodiment of the present invention. When the modified polybutadiene rubber is contained, workability may be slightly deteriorated, but tensile strength can be improved in addition to wear resistance and fuel economy performance, and these properties can be provided in a well-balanced and compatible manner. When the modified polybutadiene rubber is used in combination, the content thereof is preferably from 1 mass% to 20 mass%, and more preferably from 10 mass% to 20 mass%, based on 100 mass% of the entire diene rubber. When the content of the modified polybutadiene rubber is less than 1 mass%, the modified polybutadiene rubber is not substantially contained, and thus the effect obtained by using the modified polybutadiene rubber in combination cannot be expected. When the content of the modified polybutadiene rubber exceeds 20 mass%, tensile strength decreases.

As the modified polybutadiene rubber, a rubber generally used in a rubber composition for a tire can be used. The modified polybutadiene rubber may be, for example, a terminal-modified polybutadiene rubber modified with an organic compound having a functional group at one end or both ends of a molecular chain. The type of the functional group is not particularly limited, but a functional group having reactivity with a silanol group on the surface of the silica is preferably employed from the perspective of improving the dispersibility of the silica. Examples of the functional group that reacts with the silanol group include a hydroxyl group-containing polyorganosiloxane structure, an alkoxysilyl group, a hydroxyl group (hydroxy group), an aldehyde group, a carboxyl group, an amino group, an imino group, an epoxy group, an amide group, a thiol group, and an ether group. Among these, at least one selected from a hydroxyl group (hydroxy group), an amino group, and an alkoxyl group is preferred.

In the rubber composition for a heavy duty tire according to an embodiment of the present invention, silica is necessarily blended. Any silica that is generally used in a rubber composition for a tire can be used. Examples of the silica include wet silica (hydrous silicic acid), dry silica (silicic anhydride), calcium silicate, and aluminum silicate. These may be used alone or in combination of two or more types. The blended amount of the silica is 40 parts by mass or more, preferably from 45 parts by mass to 60 parts by mass per 100 parts by mass of the above-mentioned rubber components. When a sufficient amount of the silica is blended as described above, wear resistance and fuel economy performance can be improved. When the blended amount of the silica is less than 40 parts by mass, the effect of improving wear resistance and fuel economy performance cannot be sufficiently expected.

The CTAB adsorption specific surface area of the silica used in an embodiment of the present invention is not particularly limited, but is preferably from 120 m²/g to 230 m²/g, and more preferably from 140 m²/g to 175 m²/g. When the CTAB adsorption specific surface area of the silica is less than 120 m²/g, the effect of improving wear resistance and low rolling resistance may not be sufficiently obtained. Meanwhile, when the CTAB adsorption specific surface area of the silica exceeds 230 m²/g, workability may be deteriorated. In the present specification, the CTAB adsorption specific surface area of silica is a value measured in accordance with ISO 5794.

In the rubber composition for a heavy duty tire according to an embodiment of the present invention, a silane coupling agent is necessarily blended together with the silica. When the silane coupling agent is blended together with the silica, the dispersibility of the silica in the rubber components can be improved, and wear resistance and fuel economy performance can be improved in a well-balanced manner.

The type of the silane coupling agent is not particularly limited as long as the silane coupling agent can be used in a silica-containing rubber composition. Examples of the silane coupling agent include sulfur-containing silane coupling agents, such as bis(3-triethoxysilylpropyl) tetrasulfide, bis(3-triethoxysilylpropyl) disulfide, 3-trimethoxy silylpropylbenzothiazole tetrasulfide, γ-mercaptopropyltriethoxysilane, and 3-octanoylthiopropyltriethoxysilane.

The blended amount of the silane coupling agent is from 1 mass% to 20 mass%, preferably from 5 mass% to 15 mass% with respect to the blended amount of the silica described above. When the blended amount of the silane coupling agent is less than 1 mass% with respect to the blended amount of the silica, the dispersion of the silica cannot be sufficiently improved. When the blended amount of the silane coupling agent exceeds 20 mass% with respect to the blended amount of the silica, the silane coupling agent undergoes condensation, and thus a desired tensile strength cannot be obtained in the rubber composition.

In the rubber composition for a heavy duty tire according to an embodiment of the present invention, carbon black can be blended as a filler in addition to the silica described above. When carbon black is used in combination, the nitrogen adsorption specific surface area N₂SA of the carbon black is preferably from 65 m²/g to 120 m²/g, and more preferably from 65 m²/g to 100 m²/g. The use of the carbon black having an appropriate particle size in combination as described above is advantageous for improving wear resistance. When the nitrogen adsorption specific surface area N₂SA of the carbon black is less than 65 m²/g, the effect of improving wear resistance cannot be sufficiently expected. When the nitrogen adsorption specific surface area N₂SA of the carbon black is greater than 120 m²/g, it becomes difficult to ensure workability. The nitrogen adsorption specific surface area N₂SA of the carbon black is measured in accordance with JIS K6217-2.

When the carbon black is used in combination, the blended amount thereof is preferably from 1 part by mass to 20 parts by mass, and more preferably from 5 parts by mass to 15 parts by mass per 100 parts by mass of the rubber components. When the blended amount of the carbon black is less than 1 part by mass, the rubber cannot be blackened. When the blended amount of the carbon black exceeds 20 parts by mass, fuel economy is deteriorated.

In the rubber composition for a heavy duty tire according to an embodiment of the present invention, an additional inorganic filler other than the silica and carbon black described above can be blended. Examples of the additional inorganic filler include clay, talc, calcium carbonate, mica, and aluminum hydroxide.

In the rubber composition for a heavy duty tire according to an embodiment of the present invention, preferably, zinc oxide is blended together with the silica described above. When an appropriate amount of zinc oxide is blended in the silica-containing rubber composition as described above, a suitable crosslinked state can be held, which is advantageous for providing wear resistance and fuel economy performance in a compatible manner. Any zinc oxide that is generally used in a rubber composition for a tire can be blended. The blended amount of the zinc oxide is 2.5 mass% or more, preferably from 3.0 mass% to 10 mass%, and more preferably from 3.0 mass% to 7.0 mass% with respect to the blended amount of the silica described above. When the blended amount of the zinc oxide is less than 2.5 mass% with respect to the blended amount of the silica, vulcanization reversion occurs, and fuel economy performance and wear resistance performance are deteriorated. When the blended amount of the zinc oxide exceeds 10 mass% with respect to the blended amount of the silica, vulcanization is delayed, and thus productivity is deteriorated.

In the rubber composition for a heavy duty tire according to an embodiment of the present invention, preferably, a glycerin fatty acid ester and/or a glycerin fatty acid metal salt is blended together with the silica described above. When the glycerin fatty acid ester and/or the glycerin fatty acid metal salt is blended in the silica-containing rubber composition, two -OH groups derived from glycerin are adsorbed to the silanol groups on the surface of the silica, and in parallel therewith, the carbon chain derived from the fatty acid acts as a hydrophobizing moiety, so that the viscosity of the rubber composition can be reduced, and the dispersibility of the silica in the rubber can be improved. As a result, wear resistance and fuel economy performance can be provided in a compatible manner, and the tensile strength and workability of the rubber composition can be made satisfactory.

The blended amount of the glycerin fatty acid ester and/or the glycerin fatty acid metal salt is preferably from 1 mass% to 20 mass%, and more preferably from 3 mass% to 10 mass% with respect to the blended amount of the silica described above. Specifically, when either the glycerin fatty acid ester or the glycerin fatty acid metal salt is blended alone, the blended amount thereof is preferably from 1 mass% to 20 mass%, and more preferably from 3 mass% to 10 mass% with respect to the blended amount of the silica described above. When both the glycerin fatty acid ester and the glycerin fatty acid metal salt are blended, the blended amount of each of them may be as described above, but the total blended amount of both of them is preferably from 2 mass% to 20 mass%, and more preferably from 3 mass% to 10 mass% with respect to the blended amount of the silica described above. Also, in the case where a plurality of types of glycerin fatty acid esters are blended, or a plurality of types of glycerin fatty acid metal salts are blended, the total blended amount thereof may be the same as in the case where both the glycerin fatty acid ester and the glycerin fatty acid metal salt are blended. When the blended amount of the glycerin fatty acid ester and/or the glycerin fatty acid metal salt is less than 1 mass% with respect to the mass of the silica, the blended amount is excessively small, and thus the effect of the present invention cannot be exerted. When the blended amount of the glycerin fatty acid ester and/or the glycerin fatty acid metal salt exceeds 20 mass% with respect to the mass of the silica, tensile strength is deteriorated due to a plasticizing effect.

In the present invention, the glycerin fatty acid ester refers to a compound prepared by ester bonding of a fatty acid to a polyglycerin. The glycerin fatty acid metal salt refers to a metal salt of the above-described glycerin fatty acid ester (compound prepared by ester bonding of a fatty acid to a polyglycerin). The polyglycerin is obtained by dehydration condensation between glycerin molecules. The degree of polymerization of the glycerin in the polyglycerin moiety is not particularly limited, but is preferably from 2 to 10, and more preferably from 3 to 9. The fatty acid may be a saturated or unsaturated aliphatic carboxylic acid having preferably from 2 to 24 carbons, more preferably from 4 to 20 carbons, and may have a substituent other than the carboxy group. Examples of the substituent other than the carboxy group include a hydroxy group, an amino group, a phosphate group, a thiocarboxyl group, a mercapto group, and a nitrile group. When the fatty acid further has a hydroxy group, the fatty acid may be in the form of a condensation product prepared by ester bonding between molecules of the fatty acid.

Examples of the fatty acid include butanoic acid, pentanoic acid, hexanoic acid, heptanoic acid, octanoic acid (caprylic acid), nonanoic acid, decanoic acid, dodecanoic acid (lauric acid), tetradecanoic acid (myristic acid), pentadecanoic acid, hexadecanoic acid, 9-hexadecenoic acid, heptadecanoic acid, octadecanoic acid (stearic acid), cis-9-octadecenoic acid (oleic acid), 11-octadecenoic acid, cis,cis-9,12-octadecadienoic acid (linoleic acid), 9,12,15-octadecatrienoic acid (linolenic acid), 6,9,12-octadecatrienoic acid, 9,11,13-octadecatrienoic acid, eicosanoic acid, 8,11-eicosadienoic acid, 5,8,11-eicosatrienoic acid, 5,8,11-eicosatetraenoic acid, docosanoic acid (behenic acid), cis-13-docosenoic acid (erucic acid), tetracosanoic acid, cis-15-tetracosanoic acid, hexacosanoic acid, octacosanoic acid, triacontanoic acid, ricinoleic acid (12-hydroxy-9-cis-octadecenoic acid), and any condensation product thereof such as condensed ricinoleic acid.

Specific examples of the glycerin fatty acid ester include polyglycerin lauric acid ester, polyglycerin stearic acid ester, polyglycerin oleic acid ester, polyglycerin erucic acid ester, polyglycerin behenic acid ester, polyglycerin condensed ricinoleic acid ester, polyglycerin myristic acid ester, and polyglycerin linoleic acid ester. These glycerin fatty acid esters may be used alone or as any blend.

Examples of the metal of the glycerin fatty acid metal salt mentioned above include alkali metals, alkaline earth metals, transition metals (metals of Groups 3 to 11), aluminum, germanium, tin, antimony. Among them, from the perspective of the dispersibility of the silica, alkali metals (e.g., lithium, potassium, and sodium) and alkaline earth metals (e.g., beryllium, magnesium, calcium, strontium, and barium) are preferred, alkaline earth metals are more preferred, and magnesium is still more preferred.

The rubber composition for a heavy duty tire according to an embodiment of the present invention may also contain any additive that is commonly used in a rubber composition for a tire, such as a vulcanizing or crosslinking agent, a vulcanization accelerator, any oil, an anti-aging agent, or a plasticizer, so long as such an additive does not impair the object of the present invention. Such an additive can be kneaded into the rubber composition by a typical method, and can be used for vulcanization or crosslinking. The blended amount of such an additive may be a typical blended amount in the related art, without departing from the object of the present invention. The rubber composition for a tire can be produced by mixing the components described above by using a common rubber kneading machine such as a Banbury mixer, a kneader, or a roll.

For production of the rubber composition for a heavy duty tire according to an embodiment of the present invention, the process of mixing the respective components preferably includes at least two steps. Specifically, the mixing process preferably includes a first step in which mixing is carried out at a mixing temperature of 147°C or lower, and a second or subsequent step in which mixing is carried out at a mixing temperature of from 130°C to 150°C. When the mixing temperature is set at such a level, suitable shear can be applied to the rubber composition, and tensile strength and wear resistance can be made satisfactory. Preferably, at least the materials other than carbon black are fed and mixed in the first step, and carbon black is fed and mixed in the second or subsequent step. When the carbon black is fed in the second or subsequent step as described above, the dispersibility of the silica can be improved, and the total mixing time can be shortened. Therefore, fuel economy and productivity can be provided in a compatible manner.

The present invention will further be described below by way of Examples, but the scope of the present invention is not limited to the Examples.

### Examples

For preparation of 18 types of rubber compositions for a tire (Standard Example 1, Comparative Examples 1 to 6, and Examples 1 to 11) having formulations shown in Tables 1 to 2, blending components other than a vulcanization accelerator and sulfur were weighed and kneaded in a 1.8 L sealed Banbury mixer for 5 minutes. The resultant master batch was then discharged and cooled at room temperature. Thereafter, the master batch was charged into a 1.8 L sealed Banbury mixer, and a vulcanization accelerator and sulfur were added and mixed for two minutes. Thus, the 18 types of rubber compositions for a tire were prepared.

Each of the prepared rubber compositions for a tire was evaluated for workability, tensile strength, fuel economy performance, and wear resistance performance by the methods described below.

### Workability

Each of the prepared rubber compositions for a tire was formed into a rubber sheet having a width of 250 mm and a thickness of 20 mm by extrusion molding, and the extrusion speed was measured. The evaluation results are indicated as index values with respect to the value of Standard Example 1 that is taken as 100. A larger index value means that workability is more excellent.

### Tensile strength

Each of the prepared rubber compositions for a tire was vulcanized at 145°C for 35 minutes by using a mold having a predetermined shape, to produce a vulcanized rubber test piece. A JIS No. 3 dumbbell test piece was cut out from the vulcanized rubber test piece in accordance with JIS K6251, and a tensile test was performed at a temperature of 20°C and a tensile speed of 500 mm/min in accordance with JIS K6251, to measure a tensile elongation at break. The tensile elongation at break was used as an indicator of tensile strength. The evaluation results are indicated as index values with respect to the value of Standard Example 1 that is taken as 100. A larger index value means that tensile strength is better, and more excellent chipping resistance is achieved when the composition is made into a heavy duty tire.

### Fuel economy performance

Each of the prepared rubber compositions for a tire was vulcanized at 145°C for 35 minutes by using a mold having a predetermined shape, to produce a vulcanized rubber test piece. The tan δ at 60°C of the vulcanized rubber test piece was measured using a viscoelastic spectrometer available from Toyo Seiki Seisaku-sho, Ltd. under the conditions of an initial strain of 10%, an amplitude of ±2%, a frequency of 20 Hz, and a temperature of 60°C. The evaluation results are indicated as index values with respect to the value of Standard Example 1 that is taken as 100. A smaller index value means that fuel economy performance is more excellent.

### Wear resistance

Each of the 18 types of rubber compositions for a tire (Standard Example 1, Comparative Examples 1 to 6, and Examples 1 to 11) having formulations shown in Tables 1 to 2 was used for a tread rubber, to produce a pneumatic tire (test tire) having a tire size of 11R22.5. Parts other than the tread rubber were common for all test tires. Each of the test tires was assembled on a wheel having a rim size of 22.5 × 9.0, the air pressure was adjusted to 230 kPa, and the tire was mounted on a test vehicle. Wear resistance was determined by measuring a groove depth after traveling 50000 km on dry road surfaces. The evaluation results are indicated as index values with respect to the value of Standard Example 1 that is taken as 100. A larger index value means that the remaining groove depth is larger, and wear resistance is more excellent. An index value of "95" or more means that an excellent performance; i.e., a performance equal to or higher than the typical level is achieved.

**[Table 1]**

| | | Standard Example 1 | Comparative Example 1 | Comparative Example 2 | Comparative Example 3 | Comparative Example 4 | Example 1 | Comparative Example 5 | Example 2 | Comparative Example 6 |
|---|---|---|---|---|---|---|---|---|---|---|
| NR | Parts by mass | 60 | 100 | 60 | 60 | 60 | 60 | 50 | 85 | 60 |
| BR | Parts by mass | | | 40 | | | | | | |
| SBR | Parts by mass | | | | | 40 | | | | |
| Modified BR | Parts by mass | | | | 40 | | | | | |
| Modified SBR1 | Parts by mass | 40 | | | | | | | | |
| Modified SBR2 | Parts by mass | | | | | | 40 | 50 | 15 | 40 |
| CB1 | Parts by mass | 15 | 15 | 15 | 15 | 15 | 15 | 15 | 15 | 15 |
| CB2 | Parts by mass | | | | | | | | | |
| CB3 | Parts by mass | | | | | | | | | |
| Silica | Parts by mass | 45 | 45 | 45 | 45 | 45 | 45 | 45 | 45 | 30 |
| Silane coupling agent | Parts by mass | 3.6 | 3.6 | 3.6 | 3.6 | 3.6 | 3.6 | 3.6 | 3.6 | 2.4 |
| (Proportion relative to silica | mass%) | 8 | 8 | 8 | 8 | 8 | 8 | 8 | 8 | 8 |
| Zinc oxide | Parts by mass | 1.2 | 1.2 | 1.2 | 1.2 | 1.2 | 1.2 | 1.2 | 1.2 | 1.2 |
| (Proportion relative to silica | mass%) | 2.7 | 2.7 | 2.7 | 2.7 | 2.7 | 2.7 | 2.7 | 2.7 | 4.0 |
| Glycerin fatty acid ester | Parts by mass | | | | | | | | | |
| (Proportion relative to silica | mass%) | | | | | | | | | |
| Stearic acid | Parts by mass | 2 | 2 | 2 | 2 | 2 | 2 | 2 | 2 | 2 |
| Anti-aging agent | Parts by mass | 1.5 | 1.5 | 1.5 | 1.5 | 1.5 | 1.5 | 1.5 | 1.5 | 1.5 |
| Wax | Parts by mass | 1 | 1 | 1 | 1 | 1 | 1 | 1 | 1 | 1 |
| Vulcanization accelerator | Parts by mass | 1.5 | 1.5 | 1.5 | 1.5 | 1.5 | 1.5 | 1.5 | 1.5 | 1.5 |
| Sulfur | Parts by mass | 1.5 | 1.5 | 1.5 | 1.5 | 1.5 | 1.5 | 1.5 | 1.5 | 1.5 |
| Workability | Index value | 100 | 104 | 92 | 92 | 102 | 102 | 101 | 102 | 112 |
| Tensile strength | Index value | 100 | 126 | 93 | 88 | 98 | 102 | 97 | 112 | 118 |
| Fuel economy performance | Index value | 100 | 117 | 104 | 87 | 117 | 94 | 88 | 98 | 84 |
| Wear resistance | Index value | 100 | 95 | 127 | 129 | 101 | 115 | 119 | 102 | 92 |

**[Table 2]**

| | | Example 3 | Example 4 | Example 5 | Example 6 | Example 7 | Example 8 | Example 9 | Example 10 | Example 11 |
|---|---|---|---|---|---|---|---|---|---|---|
| NR | Parts by mass | 60 | 60 | 60 | 60 | 60 | 60 | 60 | 60 | 60 |
| BR | Parts by mass | | | | | | | | | |
| SBR | Parts by mass | | | | | | | | | |
| Modified BR | Parts by mass | | | | | | | | 20 | 35 |
| Modified SBR1 | Parts by mass | | | | | | | | | |
| Modified SBR2 | Parts by mass | 40 | 40 | 40 | 40 | 40 | 40 | 40 | 20 | 5 |
| CB1 | Parts by mass | 15 | 15 | 15 | 15 | 25 | | | 15 | 15 |
| CB2 | Parts by mass | | | | | | 15 | | | |
| CB3 | Parts by mass | | | | | | | 15 | | |
| Silica | Parts by mass | 45 | 45 | 45 | 45 | 45 | 45 | 45 | 45 | 45 |
| Silane coupling agent | Parts by mass | 3.6 | 3.6 | 3.6 | 3.6 | 3.6 | 3.6 | 3.6 | 3.6 | 3.6 |
| (Proportion relative to silica | mass%) | 8 | 8 | 8 | 8 | 8 | 8 | 8 | 8 | 8 |
| Zinc oxide | Parts by mass | 3.0 | 6.0 | 3.0 | 3.0 | 3.0 | 1.2 | 1.2 | 3.0 | 3.0 |
| (Proportion relative to silica | mass%) | 6.7 | 13.3 | 6.7 | 6.7 | 6.7 | 2.7 | 2.7 | 6.7 | 6.7 |
| Glycerin fatty acid ester | Parts by mass | | | 1.0 | 10.0 | 1.0 | 1.0 | 1.0 | 1.0 | 1.0 |
| (Proportion relative to silica | mass%) | | | 2.2 | 22.2 | 2.2 | 2.2 | 2.2 | 2.2 | 2.2 |
| Stearic acid | Parts by mass | 2 | 2 | 2 | 2 | 2 | 2 | 2 | 2 | 2 |
| Anti-aging agent | Parts by mass | 1.5 | 1.5 | 1.5 | 1.5 | 1.5 | 1.5 | 1.5 | 1.5 | 1.5 |
| Wax | Parts by mass | 1 | 1 | 1 | 1 | 1 | 1 | 1 | 1 | 1 |
| Vulcanization accelerator | Parts by mass | 1.5 | 1.5 | 1.5 | 1.5 | 1.5 | 1.5 | 1.5 | 1.5 | 1.5 |
| Sulfur | Parts by mass | 1.5 | 1.5 | 1.5 | 1.5 | 1.5 | 1.5 | 1.5 | 1.5 | 1.5 |
| Workability | Index value | 102 | 100 | 110 | 138 | 103 | 116 | 103 | 106 | 101 |
| Tensile strength | Index value | 112 | 125 | 118 | 103 | 112 | 124 | 103 | 105 | 101 |
| Fuel economy performance | Index value | 90 | 94 | 95 | 72 | 98 | 72 | 98 | 87 | 73 |
| Wear resistance | Index value | 119 | 110 | 115 | 101 | 118 | 100 | 119 | 120 | 126 |

Types of raw materials shown in Tables 1 and 2 are described below.
- NR: Natural rubber, RSS No. 3
- BR: Butadiene rubber, Nipol BR1220, available from Zeon Corporation
- SBR: Styrene-butadiene rubber, Nipol 1502, available from Zeon Corporation
- Modified BR: modified butadiene rubber, CB24 available from LANXESS
- Modified SBR1: Modified styrene-butadiene rubber, NS616 available from ZSE (glass transition temperature Tg = -23°C, styrene content = 22 mass%, vinyl content = 63 mass%, Mw/Mn = 1.6)
- Modified SBR2: Modified styrene-butadiene rubber, NS612 available from Zeon Corporation (glass transition temperature Tg = -61°C, styrene content = 15 mass%, vinyl content = 35 mass%, Mw/Mn = 1.5)
- CB1: Carbon black, Show Black N339, available from Cabot Japan K.K. (nitrogen adsorption specific surface area N₂SA: 90 m²/g)
- CB2: Carbon black, Show Black N550, available from Cabot Japan K.K. (nitrogen adsorption specific surface area N₂SA: 39 m²/g)
- CB3: Carbon black, Niteron #430, available from NIPPON STEEL Carbon Co., Ltd. (nitrogen adsorption specific surface area N₂SA: 137 m²/g)
- Silica: Zeosil 1165MP, available from Solvay (CTAB adsorption specific surface area: 156 m²/g)
- Silane coupling agent: bis(3-triethoxysilylpropyl) tetrasulfide, Si69, available from Evonik Degussa Corporation
- Zinc oxide: Zinc Oxide III, available from Seido Chemical Industry Co., Ltd.
- Glycerin fatty acid ester: Glycerol monostearate available from Sigma-Aldrich Co. LLC. • Stearic acid: Stearic acid YR available from NOF CORPORATION
- Anti-aging agent: Santoflex 6PPD, available from Solutia Europe
- Wax: SANNOC, available from Ouchi Shinko Chemical Industrial Co., Ltd.
- Vulcanization accelerator: NOCCELER CZ-G, available from Ouchi Shinko Chemical Industrial Co., Ltd.
- Sulfur: oil-treated sulfur, available from Karuizawa Refinery Ltd.

As can be seen from Table 1, the rubber compositions for a tire of Examples 1 to 11 have improved workability, tensile elongation at break, fuel economy performance, and wear resistance, which are equal to or higher than those of Standard Example 1, and these performances are provided in a well-balanced and highly compatible manner.

In contrast, in Comparative Example 1, the rubber component is composed of only natural rubber and does not contain a modified styrene-butadiene rubber having a glass transition temperature of lower than -50°C, and thus fuel economy performance and wear resistance are deteriorated. In Comparative Example 2, an unmodified polybutadiene rubber is contained instead of the modified styrene-butadiene rubber having a glass transition temperature of lower than -50°C, and thus workability, tensile elongation at break, and fuel economy performance are deteriorated. In Comparative Example 3, a modified polybutadiene rubber is contained instead of the modified styrene-butadiene rubber having a glass transition temperature of lower than -50°C, and thus workability and tensile elongation at break are deteriorated. In Comparative Example 4, an unmodified styrene-butadiene rubber is contained instead of the modified styrene-butadiene rubber having a glass transition temperature of lower than -50°C, and thus tensile elongation at break and fuel economy performance are deteriorated. In Comparative Example 5, the blended amount of the isoprene rubber (natural rubber) is small, and thus tensile elongation at break is deteriorated. In Comparative Example 6, the blended amount of silica is small, and thus wear resistance is deteriorated.

## Claims

1. A rubber composition for a heavy duty tire, the rubber composition comprising silica in an amount of 40 parts by mass or more per 100 parts by mass of a diene rubber, the diene rubber containing an isoprene rubber in an amount from 60 mass% to 85 mass% and a modified styrene-butadiene rubber having a glass transition temperature of lower than -50°C in an amount from 15 mass% to 40 mass%, and comprising a silane coupling agent in an amount from 1 mass% to 20 mass% with respect to a blended amount of the silica.

2. The rubber composition for a heavy duty tire according to claim 1, comprising zinc oxide in an amount from 3.0 mass% to 10 mass% with respect to the blended amount of the silica.

3. The rubber composition for a heavy duty tire according to claim 1 or 2, comprising a glycerin fatty acid ester and/or a glycerin fatty acid metal salt in an amount from 1 mass% to 20 mass% with respect to the blended amount of the silica.

4. The rubber composition for a heavy duty tire according to any of claims 1 to 3, comprising carbon black having a nitrogen adsorption specific surface area N₂SA of from 65 m²/g to 120 m²/g in an amount from 1 part by mass to 20 parts by mass per 100 parts by mass of the diene rubber.

5. The rubber composition for a heavy duty tire according to any of claims 1 to 4, wherein the diene rubber contains a modified polybutadiene rubber in an amount from 1 mass% to 20 mass% with respect to 100 mass% of the diene rubber.
